# EUROPÄISCHE PATENTSCHRIFT

(11) **EP 3 445 474 B1**
(45) Veröffentlichungstag und Bekanntmachung des Hinweises auf die Patenterteilung: **18.03.2020**
(21) Anmeldenummer: 17716204.7
(22) Anmeldetag: 06.04.2017
(51) Int. Cl.: B01D 53/14, C10L 3/10

(54) **VORMISCHUNG ZUR HERSTELLUNG EINES ABSORPTIONSMITTELS ZUR ENTFERNUNG VON SAUERGASEN AUS EINEM FLUIDSTROM**
PREMIX FOR PRODUCING AN ABSORPTION AGENT FOR REMOVING ACID GASES FROM A FLUID FLOW
PRÉMÉLANGE POUR LA PRODUCTION D'UN AGENT D'ABSORPTION POUR L'ÉLIMINATION DE GAZ ACIDES D'UN FLUX DE FLUIDE

(30) Priorität: 18.04.2016 EP 16165810
(43) Veröffentlichungstag der Anmeldung: 27.02.2019
(73) Patentinhaber: BASF SE, 67056 Ludwigshafen am Rhein (DE)
(72) Erfinder: INGRAM, Thomas, 67056 Ludwigshafen (DE); VORBERG, Gerald, 67056 Ludwigshafen (DE); SIEDER, Georg, 67056 Ludwigshafen (DE)
(74) Vertreter: Reitstötter Kinzebach
(86) Internationale Anmeldenummer: PCT/EP2017/058285
(87) Internationale Veröffentlichungsnummer: WO 2017/182289

(56) Entgegenhaltungen:
- EP-A1- 2 990 090
- EP-A2- 0 134 948
- WO-A1-2007/135100

## Beschreibung

Die vorliegende Erfindung betrifft eine Vormischung zur Herstellung eines Absorptionsmittels zur Entfernung von Sauergasen aus einem Fluidstrom, und ein Verfahren zur Herstellung eines Absorptionsmittels aus der Vormischung.

Die Entfernung von Sauergasen, wie z. B. CO₂, H₂S, SO₂, CS₂, HCN, COS oder Merkaptanen, aus Fluidströmen wie Erdgas, Raffineriegas oder Synthesegas, ist aus unterschiedlichen Gründen von Bedeutung. So sind zahlreiche Schwefelverbindungen bereits in niedrigen Konzentrationen übel riechend und toxisch. Kohlendioxid muss unter anderem aus Erdgas entfernt werden, weil eine hohe Konzentration an CO₂ bei einer Verwendung als Pipeline- oder Sales Gas den Brennwert des Gases reduziert. Außerdem kann CO₂ in Verbindung mit Feuchtigkeit, die in den Fluidströmen häufig mitgeführt wird, zu Korrosion an Leitungen und Armaturen führen.

Zur Entfernung von Sauergasen werden Wäschen mit wässrigen Lösungen anorganischer oder organischer Basen, beispielsweise Aminen, eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf ausgestrippt werden. Nach dem Regenerationsprozess kann das Absorptionsmittel wiederverwendet werden.

Die für die Sauergaswäsche verwendeten Absorptionsmittel umfassen oftmals Säuren. So beschreibt die US 2010/0288125 A1 ein Absorptionsmittel, welches wenigstens ein Amin und wenigstens eine Phosphonsäure im molaren Verhältnis von 0,0005 bis 1,0 umfasst. Die US 4,892,674 beschreibt die Entfernung von Schwefelwasserstoff aus Fluidströmen mit einer Absorptionslösung, die ein Amin und ein stark sterisch gehindertes Aminosalz und/oder eine sterisch gehinderte Aminosäure enthält. Die EP 2 990 090 A1 beschreibt ein wässriges Absorptionsmittel zur selektiven Schwefelwasserstoff-Entfernung, welches ein tertiäres Amin, ein sterisch gehindertes Amin und eine Säure in einer Menge, gerechnet als Neutralisationsäquivalente bezogen auf die protonierbaren Stickstoffatome der Amine, von 0,05 bis 15,0 % umfasst.

Zwischen der Säure und im Absorptionsmittel enthaltenen Basen, beispielsweise Aminen, bilden sich Protonierungsgleichgewichte aus. Die Lage der Gleichgewichte ist temperaturabhängig und das Gleichgewicht ist bei höheren Temperaturen zum freien Oxoniumion und/oder dem Aminsalz mit der niedrigeren Protonierungsenthalpie verschoben. Für die Verwendung in Absorptionsmitteln geeignete Amine zeigen vorteilhafterweise eine ausgeprägte Temperaturabhängigkeit des pKs-Wertes. Dies hat zur Folge, dass bei relativ niedrigeren Temperaturen, wie sie im Absorptionsschritt herrschen, der höhere pH-Wert die effiziente Sauergas-Absorption fördert, während bei relativ höheren Temperaturen, wie sie im Desorptionsschritt herrschen, der niedrigere pH-Wert die Freisetzung der absorbierten Sauergase unterstützt.

Nachteilig am Zusatz bestimmter Säuren ist, dass die Säure die Zersetzung von im Absorptionsmittel enthaltenen Aminen beschleunigen kann.

Es wurde nun gefunden, dass Dicarbonsäuren wie Bernsteinsäure oder Adipinsäure ebenfalls die Regeneration von wässrigen aminischen Absorptionsmitteln erleichtern können. Im Vergleich zu Absorptionsmitteln mit z. B. Mineralsäuren oder niederen organischen Säuren wie Ameisensäure weisen Absorptionsmittel mit Dicarbonsäuren eine verringerte Zersetzung von Aminen wie Methyldiethanolamin (MDEA) auf.

Die Herstellung von Absorptionsmitteln für die Gaswäsche erfolgt in der Regel durch Mischen von wasserarmen Konzentraten bzw. reinen Aminen oder Amingemischen mit Wasser direkt an der Gaswaschanlage. So werden das Transportvolumen und das Transportgewicht der aminischen Komponente möglichst gering gehalten. Beispielsweise beschreibt die WO 2007/135100 A1 eine Vormischung zur Herstellung eines Absorptionsmittels, welche ein Alkanolamin, Piperazin und Wasser bei einer Gesamtmenge an Amin von mehr als 65 Gew.-% umfasst.

Die Eindosierung von Säuren erfolgt in der Regel kurz vor der Verwendung des Absorptionsmittels oder im laufenden Betrieb. Geeigneter Weise werden die Säuren als wässrige Lösungen zugegeben. Nachteilig bei der Verwendung von Dicarbonsäuren ist, dass diese als Feststoffe vorliegen und oftmals in Wasser schwerlöslich sind. Da eine Feststoffdosierung in der Regel aufwendig und an den meisten Gaswäscheanlagen nicht vorgesehen ist, müssen stark verdünnte wässrige Lösungen derartiger Dicarbonsäuren verwendet werden. Dies führt zu einem hohen Transportvolumen und Transportgewicht der Säure-Komponente. Bei der Verwendung stark verdünnter wässriger Lösungen der Dicarbonsäuren kann es außerdem nötig sein, große Mengen der Lösung einsetzen zu müssen, um die gewünschte Säurekonzentration zu bewirken. Dies kann eine ungewollte Verdünnung des Absorptionsmittels bedingen. Ein Lösen der Dicarbonsäure in der im Wesentlichen wasserfreien aminischen Komponente ist aufgrund der in der Regel gegenüber Wasser noch schlechteren Löslichkeit nicht möglich.

Der Erfindung liegt die Aufgabe zu Grunde, eine transportfähige und gut handhabbare Lösung einer in Wasser schwerlöslichen Dicarbonsäure für die Herstellung eines Absorptionsmittels zur Entfernung von Sauergasen aus einem Fluidstrom bereitzustellen.

Die EP 0 134 948 A2 beschreibt eine Zusammensetzung zum Mischen mit Wasser, um eine wässrige, alkalische Lösung zu erhalten. Die Zusammensetzung umfasst ein alkalisches Material und eine Säure mit einem pKs-Wert von weniger als 6 in einer Menge, die ausreichend ist um mehr als 0% bis 22% des alkalischen Materials zu protonieren. Die wässrige, alkalische Lösung weist verbesserte Eigenschaften bei der Absorption von Schwefelwasserstoff aus einem Fluidstrom gegenüber Lösungen ohne Säure auf.

Die Aufgabe wird gelöst durch eine Vormischung zur Herstellung eines Absorptionsmittels zur Entfernung von Sauergasen aus einem Fluidstrom, welche umfasst:
a) wenigstens ein tertiäres Amin und/oder ein sterisch gehindertes sekundäres Amin;
b) eine Dicarbonsäure in einer Menge, gerechnet als Neutralisationsäquivalente bezogen auf die protonierbaren Stickstoffatome in a), von mindestens 30%, wobei die Dicarbonsäure in Wasser bei einer Temperatur von 20 °C zu höchstens 15 g Dicarbonsäure pro 100 g Wasser löslich ist; und
c) 20 bis 80 Gew.-% Wasser.

Es wurde gefunden, dass die in Wasser schwerlöslichen Dicarbonsäuren b) in der Zusammensetzung der Vormischung vollständig löslich sind. Die Herstellung eines Absorptionsmittels kann somit durch einfaches Vermischen der Vormischung mit Wasser und/oder Amin am Verwendungsort erfolgen.

Es wurde ferner gefunden, dass die Dicarbonsäuren b) eine höhere Stabilität zersetzungsanfälliger Amine wie Methyldiethanolamin (MDEA) in wässrigen Absorptionsmitteln bewirken. Dies ermöglicht einen effizienteren Betrieb der Gaswäscheanlage, da das Absorptionsmittel länger verwendet werden kann.

Das Amin a) umfasst ein tertiäres Amin und/oder ein sterisch gehindertes sekundäres Amin.

Unter einem "tertiären Amin" werden Verbindungen mit wenigstens einer tertiären Aminogruppe verstanden. Das tertiäre Amin enthält vorzugsweise ausschließlich tertiäre Aminogruppen, d. h. es enthält neben wenigstens einer tertiären Aminogruppe keine primären oder sekundären Aminogruppen. Das tertiäre Amin ist vorzugsweise ein Monoamin. Das tertiäre Amin verfügt vorzugsweise nicht über saure Gruppen, wie insbesondere Phosphonsäure-, Sulfonsäure- und/oder Carbonsäuregruppen.

Zu den geeigneten tertiären Aminen a) zählen insbesondere
1. Tertiäre Alkanolamine wie
   Bis(2-hydroxyethyl)-methylamin (Methyldiethanolamin, MDEA), Tris(2-hydroxyethyl)amin (Triethanolamin, TEA), Tributanolamin, 2-Diethylaminoethanol (Diethylethanolamin, DEEA), 2-Dimethylaminoethanol (Dimethylethanolamin, DMEA), 3-Dimethyl-amino-1-propanol (N,N-Dimethylpropanolamin), 3-Diethylamino-1-propanol, 2-Diisopropylaminoethanol (DIEA), N,N-Bis(2-hydroxypropyl)methylamin (Methyldiisopropanolamin, MDIPA);
2. Tertiäre Aminoether wie
   3-Methoxypropyldimethylamin;
3. Tertiäre Polyamine, z. B. bistertiäre Diamine wie
   N,N,N',N'-Tetramethylethylendiamin, N,N-Diethyl-N',N'-dimethylethylendiamin, N,N,N',N'-Tetraethylethylendiamin, N,N,N',N'-Tetramethyl-1,3-propandiamin (TMPDA), N,N,N',N'-Tetraethyl-1,3-propandiamin (TEPDA), N,N,N',N'-Tetramethyl-1,6-hexandiamin, N,N-Dimethyl-N',N'-diethylethylendiamin (DMDEEDA), 1-Dimethylamino-2-dimethylaminoethoxyethan (Bis[2-(dimethylamino)ethyl]ether), 1,4-Diazabicyclo-[2.2.2]octan (TEDA), Tetramethyl-1,6-hexandiamin;
und Gemische davon.

Tertiäre Alkanolamine sind besonders bevorzugt. Am stärksten bevorzugt ist Methyldiethanolamin (MDEA).

Unter einem "sterisch gehinderten sekundären Amin" werden Verbindungen mit wenigstens einer sterisch gehinderten sekundären Aminogruppe verstanden. Unter einer sterisch gehinderten sekundären Aminogruppe wird die Anwesenheit mindestens eines sekundären oder tertiären Kohlenstoffatoms in unmittelbarer Nachbarschaft zum Stickstoffatom der Aminogruppe verstanden.

Unter einem sekundären Kohlenstoffatom wird ein Kohlenstoffatom, welches außer der Bindung zur sterisch gehinderten Position zwei Kohlenstoff-Kohlenstoff-Bindungen aufweist, verstanden. Unter einem tertiären Kohlenstoffatom wird ein Kohlenstoffatom, welches außer der Bindung zur sterisch gehinderten Position drei Kohlenstoff-Kohlenstoff-Bindungen aufweist, verstanden.

Zu den geeigneten sterisch gehinderten sekundären Aminen a) zählen insbesondere
1. Sterisch gehinderte sekundäre Alkanolamine wie
   2-(2-tert-Butylaminoethoxy)ethanol (TBAEE), 2-(2-tert-Butylamino)-propoxyethanol, 2-(2-tert-Amylaminoethoxy)ethanol, 2-(2-(1-Methyl-1-ethylpropylamino)ethoxy)ethanol, 2-(tert-Butylamino)ethanol, 2-tert-Butylamino-1-propanol, 3-tert-Butylamino-1-propanol, 3-tert-Butylamino-1-butanol, 3-Aza-2,2-dimethyl-1,6-hexandiol, 2-(2-Isopropylamino-ethoxy)ethanol, 2-(2-Isopropylamino)-propoxyethanol, 2-(Isopropylamino)ethanol, 2-Isopropylamino-1-propanol, 3-Isopropylamino-1-propanol, und 3-Isopropylamino-1-butanol;
2. Sterisch gehinderte Aminoether wie
   1,2-Bis-(tert-butylaminoethoxy)-ethan, Bis-(tert-butylaminoethyl)-ether, 2-(2-(2-(tert-Butylamino)ethoxy)ethoxy)ethoxy-methylether (MEEETB);
und Gemische davon.

Sterisch gehinderte sekundäre Alkanolamine sind bevorzugt, insbesondere sterisch gehinderte sekundäre Alkanolamine, welche eine tert-Butylgruppe enthalten. Am stärksten bevorzugt ist 2-(2-tert-Butylaminoethoxy)ethanol (TBAEE).

In einer Ausführungsform enthält die Vormischung kein sterisch ungehindertes primäres Amin oder sterisch ungehindertes sekundäres Amin. Unter einem sterisch ungehinderten primären Amin werden Verbindungen verstanden, die über primäre Aminogruppen verfügen, an die lediglich Wasserstoffatome oder primäre oder sekundäre Kohlenstoffatome gebunden sind. Unter einem sterisch ungehinderten sekundären Amin werden Verbindungen verstanden, die über sekundäre Aminogruppen verfügen, an die lediglich Wasserstoffatome oder primäre Kohlenstoffatome gebunden sind.

Die Vormischung enthält eine Dicarbonsäure c) in einer Menge, gerechnet als Neutralisationsäquivalente bezogen auf die protonierbaren Stickstoffatome in a), von mindestens 30%. Vorzugsweise beträgt die Menge an Dicarbonsäure b) in der Vormischung, gerechnet als Neutralisationsäquivalente bezogen auf die protonierbaren Stickstoffatome in a), 30 bis 400%, besonders bevorzugt 50 bis 400%, ganz besonders bevorzugt 50 bis 300% und am stärksten bevorzugt 100 bis 300%.

Unter einer Dicarbonsäure werden Verbindungen verstanden, die über zwei Carboxylgruppen im Molekül verfügen.

Unter einem "Neutralisationsäquivalent" wird der fiktive Bruchteil eines Säuremoleküls verstanden, der bei der Neutralisationsreaktion in wässriger Lösung ein Proton abzugeben vermag. Beispielsweise entspricht ein Molekül Ameisensäure einem Neutralisationsäquivalent, ein Molekül Bernsteinsäure zwei Neutralisationsäquivalenten und ein Molekül H₃PO₄ drei Neutralisationsäquivalenten.

Der Begriff "protonierbare Stickstoffatome" bezieht sich auf die Summe der in den Aminen gemäß a) enthaltenen Stickstoffatome, welche in wässriger Lösung protoniert werden können. Dies sind in der Regel Aminogruppen-Stickstoffatome.

Die Dicarbonsäure ist in Wasser bei einer Temperatur von 20 °C zu höchstens 15 g Dicarbonsäure pro 100 g Wasser löslich. Die folgende Tabelle zeigt die Löslichkeiten verschiedener Dicarbonsäuren in Wasser.

| Säure | Löslichkeit [g/100g] | Temperatur [K] | Quelle |
|---|---|---|---|
| Oxalsäure | 8,0 | 293,3 | Braban et al.: J. Phys. Chem. A, 2003, (107), S. 6594-6602 |
| Malonsäure | 60,0 | 294,3 | Braban et al.: J. Phys. Chem. A, 2003, (107), S. 6594-6602 |
| Bernsteinsäure | 5,97 | 293,2 | Oliveira, M.L.N; Franco, M.R: Fluid Phase Equilibria, 2012, (326), S. 50-53 |
| Glutarsäure | 54,1 | 293,2 | Apelblat, A.; Manzurola, E.: J. Chem. Thermodyn., 1989, (21), S. 1005-1008 |
| Adipinsäure | 1,91 | 293,2 | Apelblat, A. Manzurola, E.: J. Chem. Thermodyn., 1987, (19), S. 317-320 |

Zu den geeigneten Dicarbonsäuren c) zählen insbesondere Oxalsäure, Bernsteinsäure, Adipinsäure, Pimelinsäure, Korksäure, Azelainsäure und Sebacinsäure. Besonders bevorzugt sind Adipinsäure und Bernsteinsäure. Am stärksten bevorzugt ist Bernsteinsäure.

Die erfindungsgemäße Vormischung enthält 20 bis 80 Gew.-% Wasser, vorzugsweise 30 bis 70 Gew.-% Wasser, besonders bevorzugt 40 bis 70 Gew.-% Wasser und am stärksten bevorzugt 50 bis 70 Gew.-% Wasser.

Die Erfindung betrifft außerdem ein Verfahren zur Herstellung eines Absorptionsmittels zur Entfernung von Sauergasen aus einem Fluidstrom, umfassend das Mischen einer wie oben beschriebenen Vormischung, wobei die Menge an Dicarbonsäure in der Vormischung, gerechnet als Neutralisationsäquivalente bezogen auf die protonierbaren Stickstoffatome der Amine, höher ist als im Absorptionsmittel, mit einem Amin und gegebenenfalls Wasser.

Sämtliche genannten bevorzugten Ausführungsformen der oben beschriebenen Vormischung sind auch für die im erfindungsgemäßen Verfahren verwendete Vormischung bevorzugt.

Die Menge der Dicarbonsäure, gerechnet als Neutralisationsäquivalente bezogen auf die protonierbaren Stickstoffatome der Amine, ist in der Vormischung höher als im Absorptionsmittel. In einer bevorzugten Ausführungsform umfasst das Absorptionsmittel die Dicarbonsäure in einer Menge, gerechnet als Neutralisationsäquivalente bezogen auf die protonierbaren Stickstoffatome der Amine, von 0,5 bis 15%, besonders bevorzugt 1 bis 10% und am stärksten bevorzugt 2 bis 8%.

Vorzugsweise handelt es sich bei dem Amin, mit welchem die Vormischung gemischt wird, um ein tertiäres Amin und/oder ein sterisch gehindertes sekundäres Amin. Sämtliche genannten bevorzugten Ausführungsformen der oben beschriebenen tertiären Amine bzw. sterisch gehinderten sekundären Amine gelten auch für das Amin, mit welchem die Vormischung gemischt wird. Besonders bevorzugt handelt es sich bei dem Amin, mit welchem die Vormischung gemischt wird, um das Amin, welches in der Vormischung enthalten ist.

Die Aminkonzentration liegt im Absorptionsmittel üblicherweise im Bereich von 20 bis 60 Gew.-%, bevorzugt im Bereich von 30 bis 60 Gew.-%, besonders bevorzugt im Bereich von 30 bis 50 Gew.-%

Ist ein für Schwefelwasserstoff gegenüber Kohlendioxid selektives Absorptionsmittel erwünscht, enthält das Absorptionsmittel vorzugsweise kein sterisch ungehindertes primäres Amin oder sterisch ungehindertes sekundäres Amin. Verbindungen dieser Art wirken als starke Aktivatoren der CO₂-Absorption. Dadurch kann die H₂S-Selektivität des Absorptionsmittels verloren gehen.

Das Absorptionsmittel kann ein organisches Lösungsmittel umfassen. Besonders bevorzugt ist das organische Lösungsmittel ausgewählt unter Sulfonen, Glycolen und Polyalkylenglycolen. Ganz besonders bevorzugt ist das organische Lösungsmittel ausgewählt unter Sulfonen. Ein bevorzugtes organisches Lösungsmittel ist Sulfolan.

Das Absorptionsmittel kann auch Additive, wie Korrosionsinhibitoren, Enzyme etc. enthalten. Im Allgemeinen liegt die Menge an derartigen Additiven im Bereich von etwa 0,01 bis 3 Gew.-% des Absorptionsmittels.

Das Absorptionsmittel kann in einem Verfahren zur Entfernung von Sauergasen aus einem Fluidstrom verwendet werden, bei dem man den Fluidstrom mit dem Absorptionsmittel in Kontakt bringt.

Fluide sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das Verfahren ist besonders zur Behandlung von kohlenwasserstoffhaltigen Fluidströmen geeignet. Die enthaltenen Kohlenwasserstoffe sind z. B. aliphatische Kohlenwasserstoffe, wie C₁-C₄-Kohlenwasserstoffe, wie Methan, ungesättigte Kohlenwasserstoffe, wie Ethylen oder Propylen, oder aromatische Kohlenwasserstoffe wie Benzol, Toluol oder Xylol.

Das Verfahren ist zur Entfernung von CO₂ und H₂S geeignet. Neben Kohlendioxid und Schwefelwasserstoff können andere saure Gase im Fluidstrom vorhanden sein, wie COS und Mercaptane. Außerdem können auch SO₃, SO₂, CS₂ und HCN entfernt werden.

Im Verfahren wird der Fluidstrom in einem Absorptionsschritt in einem Absorber in Kontakt mit dem Absorptionsmittel gebracht, wodurch Kohlendioxid und Schwefelwasserstoff zumindest teilweise ausgewaschen werden. Man erhält einen CO₂- und H₂S-abgereicherten Fluidstrom und ein CO₂- und H₂S-beladenes Absorptionsmittel.

Als Absorber fungiert eine in üblichen Gaswäscheverfahren eingesetzte Waschvorrichtung. Das Verfahren kann einen oder mehrere, insbesondere zwei, aufeinander folgende Absorptionsschritte umfassen.

Das Verfahren umfasst bevorzugt einen Regenerationsschritt, bei dem man das CO₂- und H₂S-beladene Absorptionsmittel regeneriert. Im Regenerationsschritt werden aus dem CO₂- und H₂S-beladenen Absorptionsmittel CO₂ und H₂S und gegebenenfalls weitere saure Gasbestandteile freigesetzt, wobei ein regeneriertes Absorptionsmittel erhalten wird. Vorzugsweise wird das regenerierte Absorptionsmittel anschließend in den Absorptionsschritt zurückgeführt. In der Regel umfasst der Regenerationsschritt wenigstens eine der Maßnahmen Erwärmung, Entspannung und Strippen mit einem inerten Fluid.

Die Freisetzung der sauren Gasbestandteile im Regenerationsschritt kann beispielsweise in einer Entspannungskolonne, z. B. einem senkrecht oder waagerecht eingebauten Flash-Behälter oder einer Gegenstromkolonne mit Einbauten, erfolgen.

Die Erfindung wird anhand der nachfolgenden Beispiele näher veranschaulicht.

### Beispiele

Es werden folgende Abkürzungen verwendet:
- AS: Adipinsäure
- BS: Bernsteinsäure
- MDEA: Methyldiethanolamin
- TBAEE: 2-(2-tert-Butylaminoethoxy)ethanol

### Referenzbeispiel 1

In diesem Beispiel wurde die Löslichkeit von Bernsteinsäure bzw. Adipinsäure in verschiedenen Aminen bei 23,5 °C untersucht.

100 g MDEA wurden mit 2 g Bernsteinsäure versetzt und mittels eines Magnetrührers gerührt. Es bildete sich ein unlöslicher Bodensatz. Die Löslichkeit von Bernsteinsäure in MDEA beträgt weniger als 2 g/100g.

100 g TBAEE wurden mit 1,7 g Bernsteinsäure versetzt und mittels eines Magnetrührers gerührt. Es bildete sich ein unlöslicher Bodensatz. Die Löslichkeit von Bernsteinsäure in TBAEE beträgt weniger als 1,7 g/100g.

100 g MDEA wurden mit 2 g Adipinsäure versetzt und mittels eines Magnetrührers gerührt. Es bildete sich ein unlöslicher Bodensatz. Die Löslichkeit von Adipinsäure in MDEA beträgt weniger als 2 g/100g.

### Beispiel 1

In diesem Beispiel wurde die Löslichkeit von Bernsteinsäure bzw. Adipinsäure in wässrigen Aminlösungen bei 23,5 °C untersucht.

Dazu wurde wässrigen Aminlösungen (Ausgangslösungen) gemäß der nachstehenden Tabelle unter Rühren so lange Carbonsäure zugegeben, bis sich ein nicht-löslicher Niederschlag bildete. Die Zusammensetzungen der wässrigen Aminlösungen an der Löslichkeitsgrenze sind in der nachstehenden Tabelle angeben.

| Ausgangslösung | | Zusammensetzung Löslichkeitsgrenze | | | | |
|---|---|---|---|---|---|---|
| MDEA [Gew.-%] | TBAEE [Gew.-%] | MDEA [Gew.-%] | TBAEE [Gew.-%] | Säure | | |
| | | | | | Gew.-% | Neutr.-Äq.* |
| 20,0 | - | 15,5 | - | BS | 23,0 | 299% |
| 60,0 | - | 35,8 | - | BS | 40,6 | 229% |
| - | 20,0 | - | 15,9 | BS | 20,5 | 352% |
| - | 60,0 | - | 37,5 | BS | 37,6 | 274% |
| 20,0 | - | 16,7 | - | AS | 17,6 | 172% |
| 60,0 | - | 40,2 | - | AS | 33,4 | 135% |

| | | | | | | |
|---|---|---|---|---|---|---|
| *Neutr.-Äq. = Neutralisationsäquivalente bzgl. der Stickstoffatome in MDEA bzw. TBAEE | | | | | | |

### Referenzbeispiel 2

In diesem Beispiel wurde die Stabilität von MDEA in Anwesenheit verschiedener Carbonsäuren untersucht.

Es wurden wässrige Aminlösungen, umfassend 30 Gew.-% MDEA, 15 Gew.-% TBAEE und verschiedene Carbonsäuren gemäß nachstehender Tabelle durch Mischen hergestellt. Die so erhaltenen Lösungen wurden mit 20 Nm³/t CO₂ und 20 Nm³/t H₂S beladen. Zu diesem Zweck wurden die wässrigen Absorptionsmittel in einem Glaszylinder bei 40 °C und 1 bar vorgelegt und H₂S bzw. CO₂ für ca. 3 h durch die die Lösung geleitet. Die CO₂- bzw. H₂S-Beladung wurde per Titration bestimmt und durch anschließendes Verdünnen mit nicht beladenem Absorptionsmittel eine Beladung von 20 Nm³/t CO₂ und 20 Nm³/t H₂S eingestellt. Die so mit Sauergas beladenen Lösungen wurden in mit Stickstoff befüllte Autoklaven gegeben. Die verschlossenen Autoklaven wurden in einem Ölbad auf 160 °C aufgeheizt und diese Temperatur für 5 Tage gehalten.

Nach dem Abkühlen der Autoklaven wurden die Proben entnommen und die Sauergase (CO₂ und H₂S) mit Stickstoff gestrippt. Hierzu wurden die Proben in einen Glaskolben mit aufgesetztem Kühler gegeben und bei vollständigem Rücklauf bei ca. 100 °C über 4 h N₂ durch die Proben geleitet. Anschließend wurden die im Wesentlichen von Sauergasen befreiten Lösungen gaschromatographisch auf ihren Amingehalt untersucht. Während der TBAEE-Gehalt bei allen Proben nahezu unverändert war, zeigten sich bei MDEA deutliche Unterschiede in Abhängigkeit der verwendeten Säuren. Die Ergebnisse sind in der nachstehenden Tabelle dargestellt.

| Säure | Säuregehalt | | MDEA-Verlust |
|---|---|---|---|
| | Gew.-% | Neutr.-Äq.* | |
| Ameisensäure | 1,10 | 6,9% | 6,14 Gew.-% |
| Essigsäure | 1,26 | 6,1% | 6,35 Gew.-% |
| Bernsteinsäure | 1,42 | 7,0% | 4,95 Gew.-% |
| Adipinsäure | 1,66 | 6,6% | 2,44 Gew.-% |

| | | | |
|---|---|---|---|
| * Neutr.-Äq. = Neutralisationsäquivalente bzgl. der Stickstoffatome in MDEA bzw. TBAEE | | | |

## Patentansprüche

1. Vormischung zur Herstellung eines Absorptionsmittels zur Entfernung von Sauergasen aus einem Fluidstrom, umfassend
a) wenigstens ein tertiäres Amin und/oder ein sterisch gehindertes sekundäres Amin;
b) eine Dicarbonsäure in einer Menge, gerechnet als Neutralisationsäquivalente bezogen auf die protonierbaren Stickstoffatome in a), von mindestens 30%, wobei die Dicarbonsäure in Wasser bei einer Temperatur von 20 °C zu höchstens 15 g Dicarbonsäure pro 100 g Wasser löslich ist; und
c) 20 bis 80 Gew.-% Wasser.

2. Vormischung nach Anspruch 1, wobei die Menge an b), gerechnet als Neutralisationsäquivalente bezogen auf die protonierbaren Stickstoffatome in a), 30 bis 400% beträgt.

3. Vormischung nach einem der Ansprüche 1 oder 2, wobei das tertiäre Amin ein Alkanolamin ist.

4. Vormischung nach einem der vorhergehenden Ansprüche, wobei das sterisch gehinderte sekundäre Amin ein Alkanolaminoether ist.

5. Vormischung nach einem der vorhergehenden Ansprüche, wobei die Dicarbonsäure b) ausgewählt ist unter Bernsteinsäure und Adipinsäure.

6. Verfahren zur Herstellung eines Absorptionsmittels zur Entfernung von Sauergasen aus einem Fluidstrom, umfassend das Mischen einer Vormischung gemäß einem der Ansprüche 1 bis 5, wobei die Menge an Dicarbonsäure in der Vormischung, gerechnet als Neutralisationsäquivalente bezogen auf die protonierbaren Stickstoffatome der Amine, höher ist als im Absorptionsmittel, mit einem Amin und gegebenenfalls Wasser.

7. Verfahren nach Anspruch 6, wobei das Absorptionsmittel die Dicarbonsäure in einer Menge umfasst, gerechnet als Neutralisationsäquivalente bezogen auf die protonierbaren Stickstoffatome der Amine, von 0,5 bis 15%.

8. Verfahren nach Anspruch 6 oder 7, wobei das Absorptionsmittel frei ist von sterisch ungehinderten primären Aminen und sterisch ungehinderten sekundären Aminen.

## Claims

1. A premixture for producing an absorbent for removing acid gases from a fluid stream comprising
a) at least a tertiary amine and/or a sterically hindered secondary amine;
b) a dicarboxylic acid in an amount, calculated as neutralization equivalent based on the protonatable nitrogen atoms in a), of at least 30%, wherein the dicarboxylic acid has a solubility in water at a temperature of 20°C of not more than 15 g of dicarboxylic acid per 100 g of water; and
c) 20 to 80 wt% of water.

2. The premixture according to claim 1, wherein the amount of b), calculated as neutralization equivalent based on the protonatable nitrogen atoms in a), is 30% to 400%.

3. The premixture according to either of claims 1 and 2, wherein the tertiary amine is an alkanolamine.

4. The premixture according to any of the preceding claims, wherein the sterically hindered secondary amine is an alkanolamino ether.

5. The premixture according to any of the preceding claims, wherein the dicarboxylic acid b) is selected from succinic acid and adipic acid.

6. A process for producing an absorbent for removing acid gases from a fluid stream comprising mixing a premixture according to any of claims 1 to 5, wherein the amount of dicarboxylic acid in the premixture, calculated as neutralization equivalent based on the protonatable nitrogen atoms of the amines, is greater than in the absorbent, with an amine and optionally water.

7. The process according to claim 6, wherein the absorbent comprises the dicarboxylic acid in an amount, calculated as neutralization equivalent based on the protonatable nitrogen atoms of the amines, of 0.5% to 15%.

8. The process according to claim 6 or 7, wherein the absorbent is free from sterically unhindered primary amines and sterically unhindered secondary amines.

## Revendications

1. Prémélange pour la préparation d'un agent d'absorption pour l'élimination de gaz acides d'un flux de fluide, comprenant
a) au moins une amine tertiaire et/ou une amine secondaire stériquement encombrée ;
b) un acide dicarboxylique en une quantité, calculée en tant qu'équivalents de neutralisation par rapport aux atomes d'azote protonables dans a), d'au moins 30 %, l'acide dicarboxylique étant soluble dans l'eau à une température de 20 °C à raison d'au plus 15 g d'acide dicarboxylique pour 100 g d'eau ; et
c) 20 à 80 % en poids d'eau.

2. Prémélange selon la revendication 1, la quantité de b), calculée en tant qu'équivalents de neutralisation par rapport aux atomes d'azote protonables dans a), étant de 30 à 400 %.

3. Prémélange selon l'une quelconque des revendications 1 et 2, l'amine tertiaire étant une alcanolamine.

4. Prémélange selon l'une quelconque des revendications précédentes, l'amine secondaire stériquement encombrée étant un alcanolaminoéther.

5. Prémélange selon l'une quelconque des revendications précédentes, l'acide dicarboxylique b) étant choisi parmi l'acide succinique et l'acide adipique.

6. Procédé pour la préparation d'un agent d'absorption pour l'élimination de gaz acides d'un flux de fluide, comprenant le mélange d'un prémélange selon l'une quelconque des revendications 1 à 5, la quantité d'acide dicarboxylique dans le prémélange, calculée en tant qu'équivalents de neutralisation par rapport aux atomes d'azote protonables de l'amine, étant supérieure à celle dans l'agent d'absorption, avec une amine et éventuellement de l'eau.

7. Procédé selon la revendication 6, l'agent d'absorption comprenant l'acide dicarboxylique en une quantité, calculée en tant qu'équivalents de neutralisation par rapport aux atomes d'azote protonables de l'amine, de 0,5 à 15 %.

8. Procédé selon la revendication 6 ou 7, l'agent d'absorption étant exempt d'amines primaires stériquement non encombrées et d'amines secondaires stériquement non encombrées.
